# EUROPEAN PATENT SPECIFICATION

(11) **EP 0 453 167 B1**
(45) Date of publication and mention of the grant of the patent: **18.01.1995**
(21) Application number: 91303160.5
(22) Date of filing: 10.04.1991
(51) Int. Cl.: B21D 53/16, F16D 23/06

(54) **Method of manufacturing outside ring**
Verfahren zum Herstellen eines Reibringes
Procédé de fabrication d'un anneau d'embrayage

(30) Priority: 17.04.1990 JP 99305/90
(43) Date of publication of application: 23.10.1991
(73) Proprietor: Nippon Seiko Kabushiki Kaisha, Tokyo (JP)
(72) Inventor: Ohkubo, Kiyoshi, Maebashi-shi, Gunma-ken (JP); Nagayama, Yujiro, Kamakura-shi, Kanagawa-ken (JP)
(74) Representative: Abbie, Andrew Kenneth

(56) References cited:
- DE-A- 2 159 194
- DE-A- 3 735 978
- FR-A- 530 561
- GB-B- 1 125 946
- US-A- 4 342 214

## Description

The present invention relates to a method of manufacturing an outside ring and, more particularly, is directed to a method for the manufacture of an outside ring which is built in a synchromesh mechanism of a manual transmission for automobiles.

### Related Background Art

In accordance with the recent increase in an output power of engine for automobile, a greater synchromesh capacity is required of the manual transmission today.

To increase the synchromesh capacity, a double cone type synchromesh mechanism instead of a single cone type has been built in in many cases so as not to increase the operating force of the shift lever.

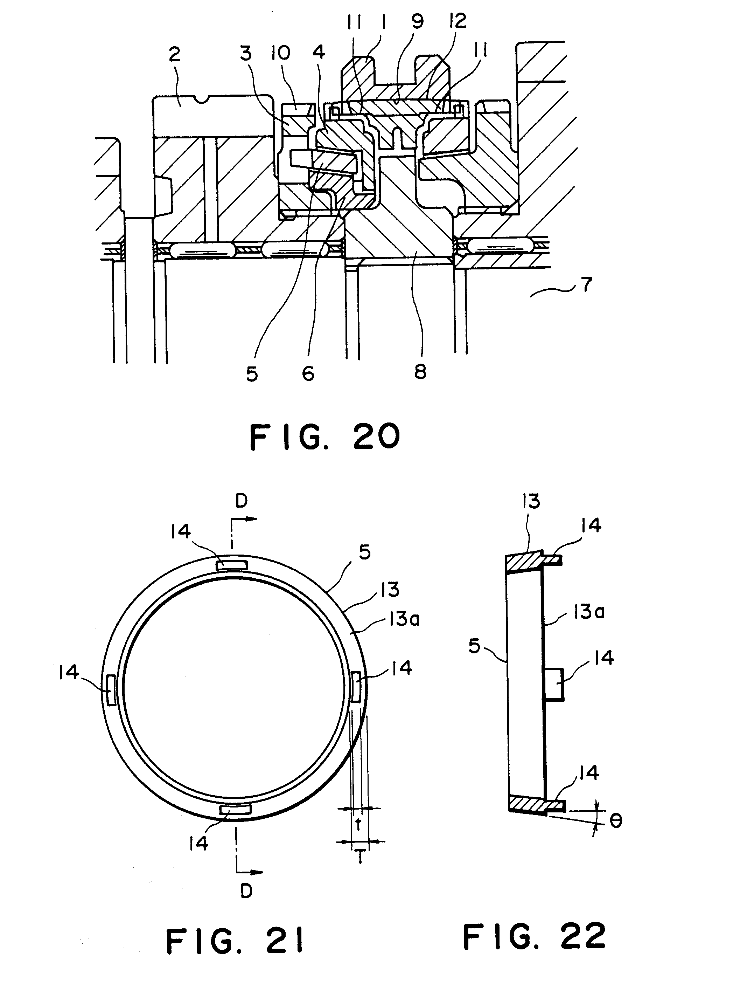

As shown in Fig. 20, a double cone type synchromesh mechanism has such a configuration wherein an outer balk ring 4, an outside ring 5, and an inner balk ring 6 are provided between the coupling sleeve 1 and the clutch gear 3 which rotates with being synchronized with the transmission gear 2; the coupling sleeve 1, being engaged with the insert spring 12 fitting onto the periphery of the synchronizer hub 8 which rotates with the drive shaft 7, moves axially (left/right direction in Fig. 20) on the basis of an operation of the shift lever.

When the coupling sleeve is pushed to left in Fig. 20 with the shift lever operation, due to the action of the frictional force between the said outer balk ring 4 and the outside ring 5 and between this outside ring 5 and the inner balk ring 6, there is no difference of revolution any more between the coupling sleeve 1 and the clutch gear 3. Succeedingly, so as to bridge from the spline groove 10 formed on the outer peripheral edge of the clutch gear 3, to the spline groove 11 formed on the outer peripheral edge of the insert spring ring 12, the spline groove 9 formed on the inner periphery of the coupling sleeve 1 engages with them, and the transmission gear 2 rotates with being synchronized with the drive shaft 7.

The outside ring 5, which is built in a double cone type synchromesh mechanism constructed and operated as above described, has a configuration as in Figs. 21 and 22.

More particularly, the outside ring 5 comprises a frusto-conical shell portion 13 whose diameter changes along its axis and several clicks 14 which are formed at regular intervals to each other on the end surface 13a of this frusto-conical shell portion 13 having the larger diameter than the other end. The thickness t of each click 14 is smaller than the thickness T of the frusto-conical shell portion 13 (T > t), and the clicks 14 are bent inwardly with regard to the frusto-conical shell portion 13 so as to be parallel to the axis of the frusto-conical shell portion 13.

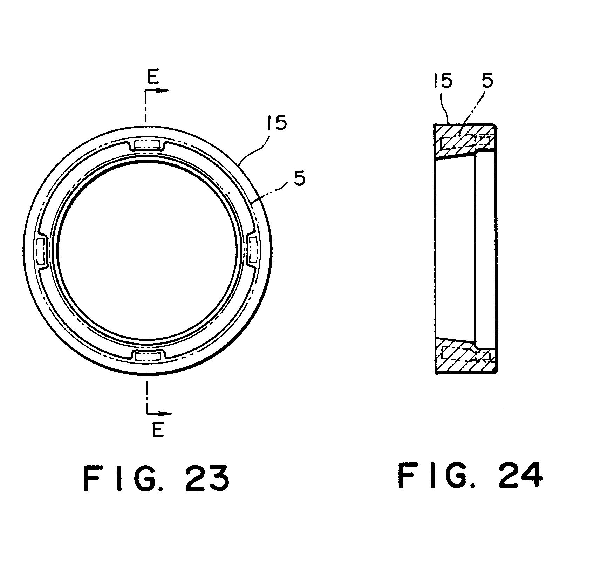

By the way, an outside ring 5 of such a configuration has been produced traditionally by chipping the unnecessary portions of a thick walled tubular material in a machining or milling process (the first method), or, like an outside ring 5 indicated by the chain line in Figs. 23 and 24, by cutting off the unnecessary portions of a material 15 as is shown in the same Figs. which has been forged out of a bar material with a fixed length (the second method.)

When making an outside ring in accordance with either of the above mentioned traditional methods, however, it requires always a huge amount of production cost.

First in case of the first method, the portion to be cut is so large that not only is the yield very poor, but it requires a lot of machining time.

Next in case of the second method, it needs many forging processes to produce a material 15 as is shown in Figs. 23 and 24, which contributes to push up the production cost. Also since a large portion has to be still cut, the yield is poor and it needs time to machine it.

German Patent Application DE-A-3,735,978 (which discloses the pre-characterising part of claim 1) describes a method of manufacturing an outside ring by punching and/or pressing a web-like or band-like steel material, said ring being in the form of a frusto-conical shell portion and tongue portions which protrude at several places from the end surface of the frusto-conical shell portion having the greater diameter, said tongue portions extending parallel to the central axis of said frusto-conical shell portion.

The ring described is for use in a synchronising device for a synchromesh gear, the ring being formed by punching and drawing of a flat steel material or a band-like steel material. There is no suggestion in this published application, however, of the detailed manufacturing process envisaged.

German Patent Application DE-A-2,159,194 describes a process for the production of annular friction discs for friction clutches which are punched or burnt out of a flat, plain sheet of metal which is then machined and subsequently heat-treated. However, in the arrangement described, the resulting annular disc is not continuous and has to be joined together by, e.g. welding.

In accordance with the present invention as claimed in claim 1, there is provided a method of manufacturing an outside ring by blanking out a workpiece from sheet metal, said ring being in the form of a frusto-conical shell portion and tongue portions which protrude at several places from the end surface of the frusto-conical shell portion having the greater diameter, said tongue portions extending parallel to the central axis of said frusto-conical shell portion, the method comprising press-forming an annular body portion into said frusto-conical shell portion, which tapers off or decreases in diameter with the distance away from said tongue portions;
characterised in that the workpiece comprises the annular body portion and tongue portions which protrude at several places from an outer peripheral edge of the annular body portion, and in that said method further comprises:
press-forming the tongue portions parallel to the central axis of said frusto-conical shell portion at the same time that said annular body portion is press-formed;
adjusting the geometry of each portion to a fixed value through the machining of the end surface of said frusto-conical shell portion having the smaller diameter and the tongue portions; and
heat-treating in order to achieve a desired hardness.

A preferred embodiment of the invention is disclosed in dependent claim 2.

At least at the end of the press-forming step, the several tongue portions above mentioned have been bent inwardly with regard to the frusto-conical shell portion. However, the process of bending each tongue portion in this way can be carried out either in the blanking step hereinafter referred to as the first step or in the press-forming step hereinafter referred to as the second step.

In case of the outside ring manufacturing method in accordance with the present invention comprising the steps above described, by making the portion of the material to be cut smaller, the machining time can be made shorter and the yield of the material can be improved.

In order that the invention will be more fully understood, preferred embodiments thereof will be described with reference to the accompany drawings, wherein:
Fig. 1 is a plan view of the material which has been made in the first step.
Fig. 2 is a sectional view taken along the line A - A of Fig. 1.
Fig. 3 is a longitudinal section showing a stamping machine used in the second step.
Fig. 4 is a transverse section of the same stamping machine.
Fig. 5 is a side view of the upper die set in this stamping machine.
Figs. 6 to 11 are longitudinal sections of the portion B in Fig. 3, which show the processing conditions of the material in the order of processing in the second step.
Fig. 12 is a plan view showing the configuration of the material after the completion of the second step.
Fig. 13 is a sectional view taken along the line C - C of Fig. 12.
Figs. 14 to 19 are the same sectional views as in Figs. 6 to 11, which show the processing conditions of the material in the order of processing in the second step using a stamping machine with the upper and lower dies of a different form being set in.
Fig. 20 is a partial cross section showing a synchromesh mechanism with an outside ring being set in.
Fig. 21 is the view of the outside ring in Fig. 20 seen from the left side.
Fig. 22 is a sectional view taken along the line D - D of Fig. 21.
Fig. 23 is the drawing of the material when making outside rings in forging processes.
Fig. 24 is a sectional view taken along the line E - E of Fig. 23.

### DESCRIPTION OF THE PREFERRED EMBODIMENTS

Now the invention will be further described with reference to the embodiments shown in the drawings.

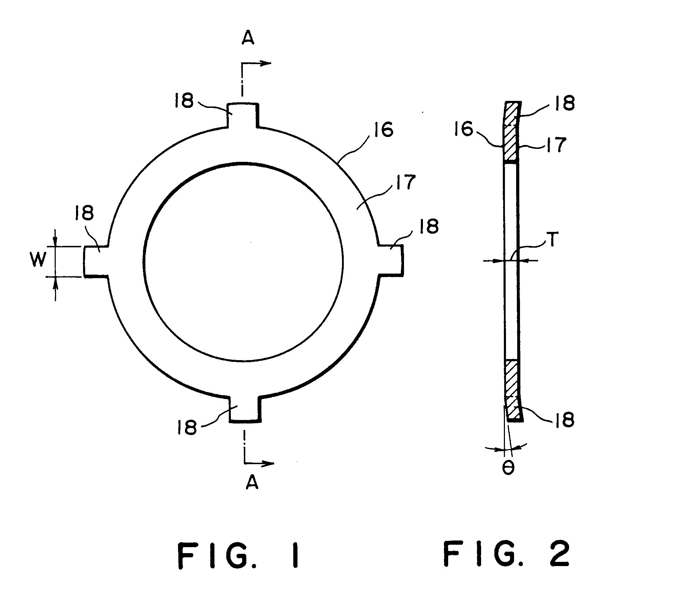

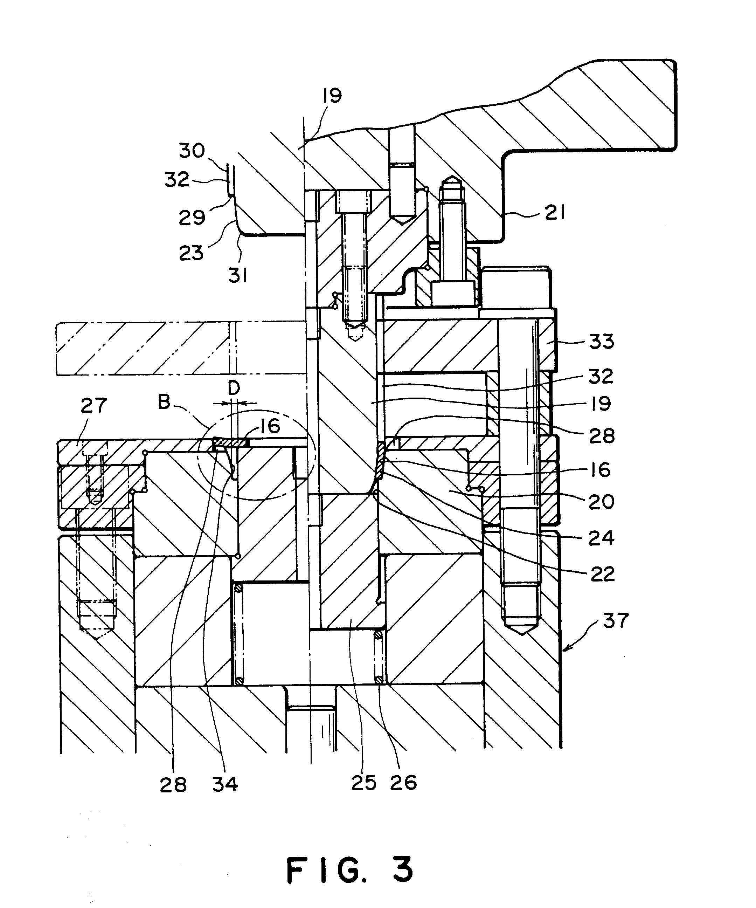

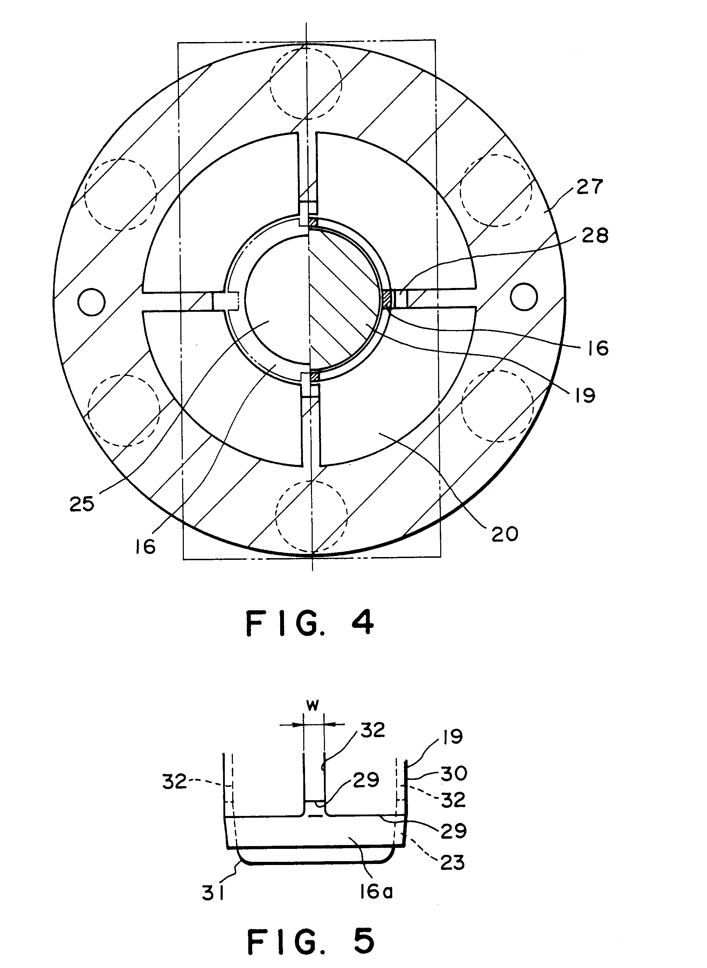

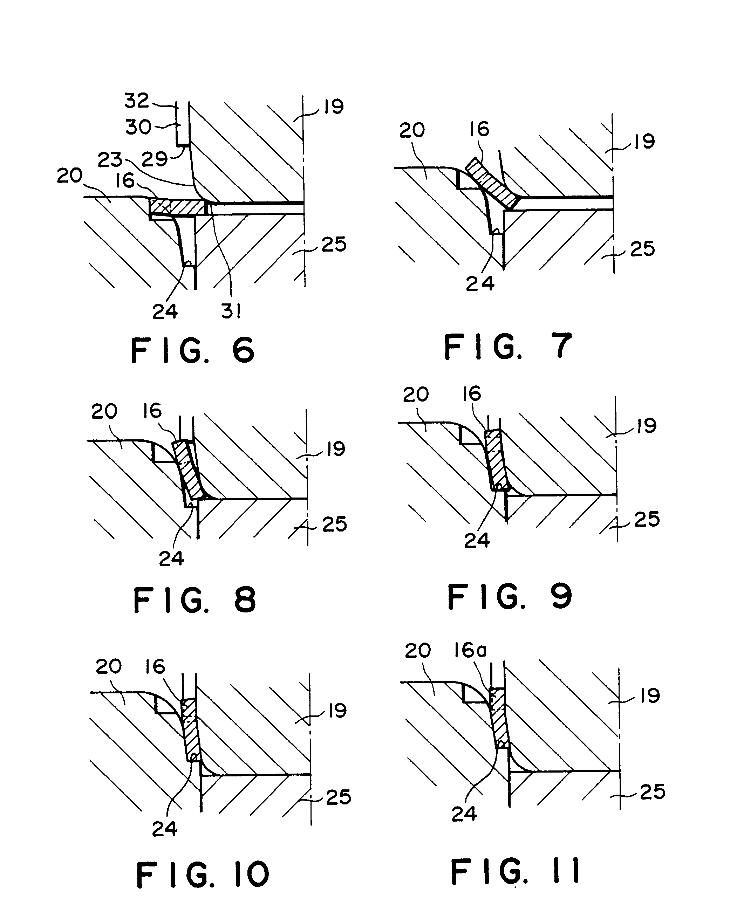

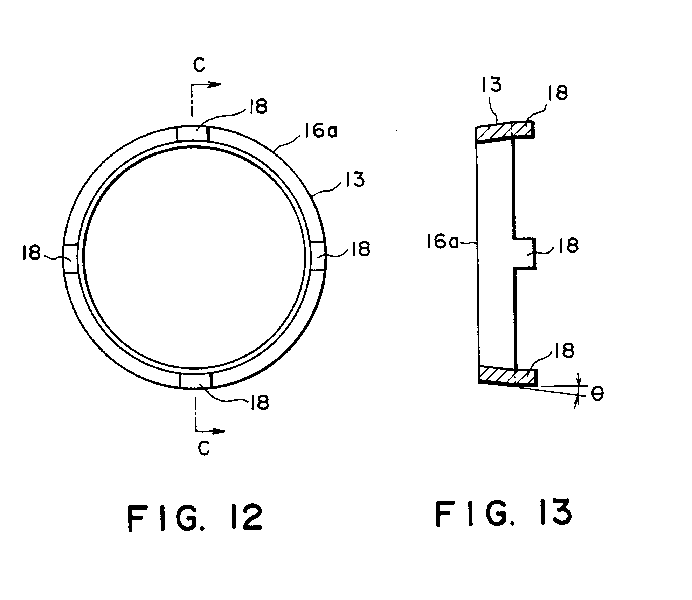

The first embodiment according to the present invention is shown in Figs. 1 to 13; Fig. 1 is a plan view of the material which has been made in the first step, Fig. 2 is a sectional view taken along the line A - A of Fig. 1, Fig. 3 is a longitudinal section showing a stamping machine used in the second step, Fig. 4 is a transverse section of the same stamping machine, Fig. 5 is a side view of the upper die set in this stamping machine, Figs. 6 to 11 are longitudinal sections of the portion B in Fig. 3, which show the processing conditions of the material in the order of processing in the second step, Fig. 12 is a plan view showing the configuration of the material after the completion of the second step, and Fig. 13 is a sectional view taken along the line C - C of Fig. 12.

When carrying out the outside ring manufacturing method of the present invention, as the first step, a material as shown in Figs. 1 and 2 is blanked out from a metal sheet in a blanking process using a not illustrated blanking device.

This material 16 includes an annular body portion 17 and several tongue portions 18 (4 pcs. in case of the embodiment illustrated) which protrude out of the peripheral edge of the body portion 17. Each tongue portion 18 is tilted by the angle ϑ with regard to the body portion 17, this inclination ϑ coinciding with the inclination ϑ of the frusto-conical shell portion (Fig. 22), which constitutes the finished outside ring 5.

In addition, when carrying out the blanking process in the first step, by making the blanked surfaces (the inner and outer peripheral edges of the body portion 17 and the peripheral edge of the tongue portions 18) smoother in a fine blanking process for example, the succeeding machining processes will be carried out easier and consequently the profile irregularity of the final product can be improved.

After the material 16 as shown in Figs. 1 and 2 is made in the first step above mentioned, then this material 16 is press formed by a stamping machine as shown in Figs. 3 and 4, in which an upper die 19 as shown in Fig. 5 is set.

With this stamping machine, by applying pressure on the material 16 between the annular lower die 20 fixed to the machine body 37 and the upper die 19 fixed to the lower surface of the ram 21, the material 16 which has a relatively flat form is processed into a material 16a which has a form as illustrated in Figs. 12 and 13.

The lower die 20 is constituted so as to provide with a bore 22 in its center and a tapered portion 34 at the upper end opening of this bore 22, which is formed so as to match the inclination ϑ of the frusto-conical shell portion 13 (see Figs. 13 and 22) of a finished outside ring.

The width D of the step portion 24 formed between the lower end of this tapered portion 34 and the upper end of the bore 22 must be a little bit smaller than the thickness T (Fig. 2) of the metal sheet which composes the material 16 (D < T), so that a part of the end edge of the frusto-conical shell portion 13 on the side with the smaller diameter can project inwardly from the step portion 24.

Furthermore, an extrusion piston 25 is vertically movably mounted inside the bore 22 of the lower die 20, and by means of a compression spring 26, upward directed resilience is applied to this extrusion piston 25.

Also, on the upper surface of the lower die 20, a locating plate 27 is fixed. Locating concaves 28 are provided at four places on the inner peripheral edge of this locating plate 27 for the engagement with the tongue portions 18 formed at four places on the outer peripheral edge of the material 16, so that the material 16 can be securely placed in the fixed position of the upper surface of the lower die 20.

On the other hand, the lower end of the upper die 19 fixed to the lower surface of the ram 21, which moves up and down by means of a not illustrated hydraulic mechanism, comprises, as shown in Figs. 3 and 5, a tapered portion 23 along the outer periphery of the lower end, and a cylinder portion 30 over this tapered portion 23, connected with this via a step 29, having a larger diameter than the upper end of the tapered portion 23. Also, the lower end of the tapered portion 23 is connected with the lower surface of the upper die 19 smoothly via an arcuate surface 31.

Furthermore, the outer surface of the cylinder portion 30 comprises concave grooves 32 at four places, each groove having a rectangular cross section and extending axially. The lower end of each concave groove 32 is open toward the step 29, and the both edges of this opening are chamfered to be a quarter circle. The width of each groove w must be slightly smaller than the width W (Fig. 1) of the tongue portions 18 formed on the outer peripheral edge of the material 16 (w < W), so that the both side edges of each tongue portion 18 may be squeezed by the inner side surfaces of each concave groove 32 and the width W of the tongue portions 18 may be controlled to the fixed value (the width w of each concave groove 18), as the press forming process in the second step proceeds and each tongue portion 18 enters each concave groove 32.

The processing of the material 16 in Figs. 1 and 2 into a configuration as is shown in Figs. 12 and 13 using a stamping machine constructed as described above, where an upper die 19 and a lower die 20 are set, is carried out as follows:
First, as indicated in the left half of Figs. 3 and 4, the ram 21 is lifted up to displace the upper die 19 sufficiently upward, and in this condition, the material 16 is placed in the fixed position of the upper surface of the lower die 20.

Next, the upper die 19 is lowered to the position shown in the right half of Figs. 3 and 4, so that the material 16 is clasped tightly between the upper die 19 and the lower die 20 to undergo a plastic deformation into a material 16a of such a configuration as illustrated in Figs. 12 and 13.

More particularly, when the upper die 19 is lowered from the position shown in the left half of Figs. 3 and 4 to the position shown in the right half of the same drawings after the material 16 has been set in the fixed position of the upper surface of the lower die 20, the material 16 undergoes a deformation in the order of Fig. 6, Fig. 7, Fig. 8, Fig. 9, and then Fig. 10 to be the configuration shown in Fig. 11.

In the stage of Fig. 11, the material 16a has a configuration illustrated in Figs. 12 and 13. More particularly, the body portion 17 (Figs. 1 and 2), being clasped between the tapered portion 23 of the outer surface of the upper die 19 and the tapered portion 34 of the inner surface of the lower die 20, undergoes a plastic deformation to be a frusto-conical shell portion 13, which tapers off, or decreases in diameter with the distance away from the tongue portions 18. In this condition, the several numbers of tongue portions 18 are parallel to the axis of the frusto-conical shell portion 13.

When the stamping processes are over and the material 16 has been processed from the configuration in Figs. 1 and 2 into the configuration shown in Figs. 12 and 13, the upper die 19 is lifted up by the ram 21.

As the upper die 19 is lifted up, an extrusion piston 25 provided inside the lower die 20 moves upward due to the resilience of a compression spring 26, so that the outer peripheral edge of the upper end of this extrusion piston 25 can push up the inner peripheral edge of the lower end of the tapered cylinder portion 13.

As a result, the processed material 16a is pushed out of the inside of the lower die 20. Furthermore, if the processed material 16a is lifted up together with the upper die 19, it is stripped of by a stripper plate 33, provided over the lower die 20 and a part of which being inserted into the concave groove 32 of the upper die 19.

Next in the third step, the material 16a comprised of the frusto-conical shell portion 13 and the tongue portions 18, which has been produced as described above, undergoes a machining process such as a cutting process.

In other words, by machining, or by cutting for example, the both upper and lower ends of the frusto-conical shell portion 13 and the tongue portions 18, the geometry of each part is adjusted to a fixed value, a surface finish is performed on desired surfaces (the end surface of the frusto-conical shell portion 13 with the smaller diameter and the end surfaces of the tongue portions 18), or desired corners are chamfered. Also in this third step, each tongue portion 18 is made thinner to form a click 14 (Figs. 21 and 22.) In this condition, the geometry of the material 16a complies with that of the outside ring 5 shown in Figs. 21 and 22.

Finally in the fourth step, heat treatment is carried out to achieve a desired hardness, and the outside ring is completed.

The action of the outside ring manufactured in accordance with the method of the present invention comprising the steps above described is in itself the same as the action of those produced by a traditional method.

By the method of the present invention, however, by restraining the cutting of materials at a low level, it is possible to shorten the processing time and to improve the yield of material.

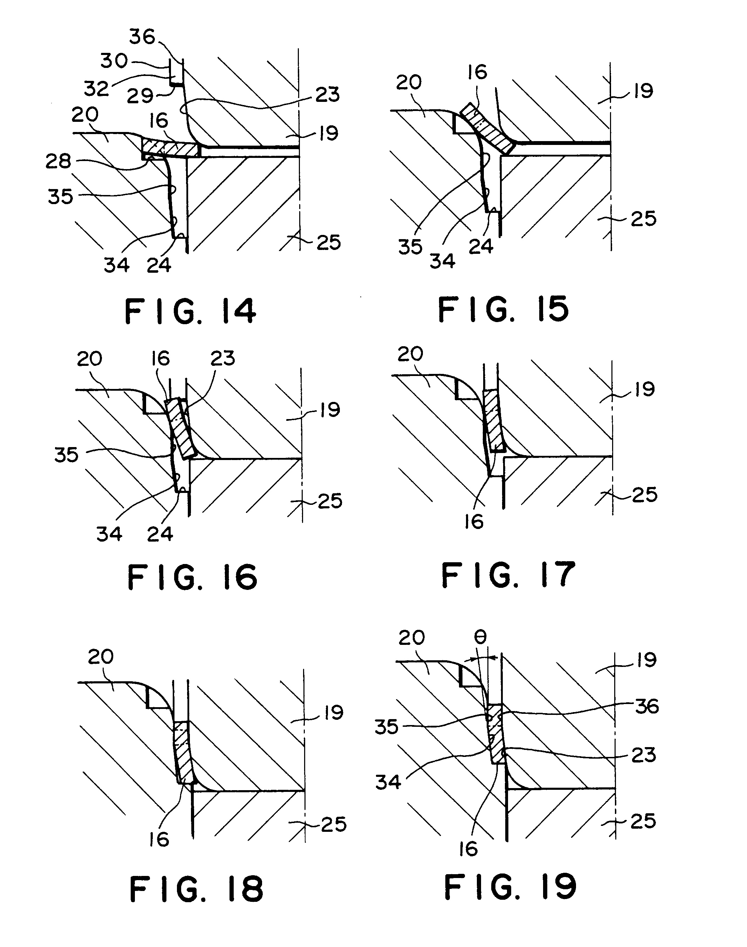

Furthermore, by changing the configuration of the upper die 19 and the lower die 20 which are set in the stamping machine used in the second step into one as in Figs. 14 to 19, not only can the inclination ϑ of each tongue portion 18 be controlled more strictly, but also the designs of upper and lower dies can be simplified.

That is to say, in case of the configuration shown in Figs. 14 to 19, a cylindrical surface 35 with a constant diameter is formed above the tapered portion 34 of the inner surface of the lower die 20.

As a result, in the final stage of the press forming processes, the process, in which the tongue portions 18 are clasped tightly between the cylindrical surface 35 and the concave groove 32 and made parallel to the axis of the tapered cylinder portion 13, can be carried out securely.

Also with this configuration of dies 19, 20, it is not necessary any more to carry out the process of forming the annular flat body portion 17 into the frusto-conical shell portion 13 and the process of squeezing the tongue portions 18 at the same time. Consequently, dies can be designed on the assumption that the deformation of the body portion 17 into the frusto-conical shell portion 13 and the squeezing of the tongue portions 18 are independent processes of each other, resulting in a higher degree of freedom in designing dies 19, 20, that is to say, the designs of dies 19, 20 are simplified.

Additionally, in case of the second embodiment above described, in the final stage of press forming processes, the tongue portions 18 are clasped between the cylindrical surface 35 and the back surface 36 of the concave groove 32 so tightly that each tongue portion 18 must not necessarily be bent toward the body portion 17 (Figs. 1 and 2) in the first step.

By the outside ring manufacturing method of the present invention comprising the above mentioned steps and acting as described above, it is possible to produce outside rings in less processes, and efficiently as well by minimizing difficult processes, and to provide outside rings at low cost.

## Claims

1. A method of manufacturing an outside ring (5) by blanking out a workpiece (16) from sheet metal, said ring (5) being in the form of a frusto-conical shell portion (13) and tongue portions (18) which protrude at several places from the end surface of the frusto-conical shell portion (13) having the greater diameter, said tongue portions (18) extending parallel to the central axis of said frusto-conical shell portion (13), the method comprising press-forming an annular body portion (17) into said frusto-conical shell portion (13), which tapers off or decreases in diameter with the distance away from said tongue portions (18);
characterised in that the workpiece (16) comprises the annular body portion (17) and tongue portions (18) which protrude at several places from an outer peripheral edge of the annular body portion (17), and in that said method further comprises:
press-forming the tongue portions (18) parallel to the central axis of said frusto-conical shell portion (13) at the same time that said annular body portion is press-formed;
adjusting the geometry of each portion (17,18) to a fixed value through the machining of the end surface of said frusto-conical shell portion (17) having the smaller diameter and the tongue portions (18); and
heat-treating in order to achieve a desired hardness.

2. A method of manufacturing an outside ring (5) according to claim 1, wherein the step of press-forming the tongue portions (18) comprises adjusting the dimensions of said tongue portions (18) to desired values by squeezing the blanked surface of the tongue portions (18) in a press die (19,20).

## Patentansprüche

1. Verfahren zum Herstellen eines Außenrings (5) durch Ausstanzen eines Werkstücks (16) aus Blech, wobei der Ring (5) die Form eines kegelstumpfförmigen Hülsenabschnitts (13) mit Zungenabschnitten (18) hat, die an mehreren Stellen von der Abschlußfläche des kegelstumpfförmigen Hülsenabschnitts (13) mit dem größeren Durchmesser vorstehen, wobei sich die Zungenabschnitte (18) parallel zur Mittelachse des kegelstumpfförmigen Hülsenabschnitts (13) erstrecken, wobei das Verfahren das Preßformen eines ringförmigen Körperabschnitts (17) in den kegelstumpfförmigen Hülsenabschnitt (13) umfaßt, der sich mit dem Abschnitt zu den Zungenabschnitten (18) verjüngt bzw. an Durchmesser verliert;
**dadurch gekennzeichnet**, daß das Werkstück (16) den ringförmigen Körperabschnitt (17) und Zungenabschnitte (18) umfaßt, die an mehreren Stellen von einem Außenumfangsrand des ringförmigen Körperabschnitts (17) vorstehen, und dadurch, daß das Verfahren des weiteren umfaßt:
Preßformen der Zungenabschnitte (18) parallel zur Mittelachse des kegelstumpfförmigen Hülsenabschnitts (13) zur gleichen Zeit, zu der der ringförmige Körperabschnitt preßgeformt wird;
Angleichen der Form jedes Abschnitts (17, 18) an einen festen Wert durch die spanende Bearbeitung der Abschlußfläche des kegelstumpfförmigen Hülsenabschnitts (13) mit dem kleineren Durchmesser und der Zungenabschnitte (18); und
Wärmebehandlung, um eine gewünschte Härte zu erreichen.

2. Verfahren zum Herstellen eines Außenrings (5) nach Anspruch 1, wobei der Schritt des Preßformens der Zungenabschnitte (18) das Angleichen der Maße der Zungenabschnitte (18) an gewünschte Werte durch Pressen der ausgestanzten Fläche der Zungenabschnitte (18) in einem Preßwerkzeug (19, 20) umfaßt.

## Revendications

1. Procédé de fabrication d'un anneau extérieur (5) par découpage d'une pièce (16) dans de la tôle, ledit anneau (5) se présentant sous la forme d'une partie (13) formant coque tronconique et de parties (18) formant languettes qui font saillie en plusieurs endroits sur la surface d'extrémité de la partie (13) formant coque tronconique qui a le plus grand diamètre, lesdites parties (18) formant languettes s'étendant parallèlement à l'axe central de ladite partie (13) formant coque tronconique, le procédé consistant à emboutir une partie (17) formant corps annulaire en ladite partie (13) formant coque tronconique qui se rétrécit ou décroit en diamètre avec l'accroissement de la distance auxdites parties (18) formant languettes ;
caractérisé en ce que la pièce (16) comprend la partie (17) formant corps annulaire et les parties (18) formant languettes qui font saillie en plusieurs endroits sur un bord périphérique extérieur de la partie (17) formant corps annulaire, et en ce que ledit procédé comprend en outre les phases consistant à :
emboutir les parties (18) formant languettes parallèlement à l'axe central de ladite partie (13) formant coque tronconique, en même temps que ladite partie formant corps annulaire est emboutie ;
ajuster la géométrie de chaque partie (17, 18) sur une valeur fixe par usinage de la surface d'extrémité de ladite partie (17) formant coque tronconique qui a le plus petit diamètre et les parties (18) formant languettes ; et
soumettre à un traitement thermique pour obtenir la dureté désirée.

2. Procédé de fabrication d'une bague extérieure (5) selon la revendication 1, dans laquelle la phase d'emboutissage des parties (18) formant languette consiste à ajuster les dimensions desdites parties (18) formant languettes sur les valeurs désirées en écrasant la surface découpée des parties (18) formant languettes dans un outil de presse (19, 20).
